# EUROPÄISCHE PATENTANMELDUNG

(11) **EP 1 348 938 A2**
(43) Veröffentlichungstag der Anmeldung: **01.10.2003**
(21) Anmeldenummer: 02027758.8
(22) Anmeldetag: 11.12.2002
(51) Int. Cl.: G01F 23/74, G01F 23/76

(54) **Füllstandgeber für Flüssigkeitsbehälter**

(30) Priorität: 27.03.2002 DE 10213694
(71) Anmelder: Pierburg GmbH, 41460 Neuss (DE)
(72) Erfinder: Bürger, Frank, 52355 Düren (DE); Ludwig, Norbert, 41379 Brüggen (DE)
(74) Vertreter: von Kirschbaum, Alexander, Dipl.-Ing.

(57) **Zusammenfassung**

Bekannte Füllstandgeber mit berührungslosen Sensoren sind konstruktiv aufwendig und es treten insbesondere bei Schräglage der Flüssigkeitsbehälter Fehler bei der Flüssigkeitsmengenanzeige auf.

Dagegen wird durch die vorliegende Erfindung mit Aufhängung des Füllstandgebers über ein Kugelgelenk am Flüssigkeitsbehälter und die Integration des Schwimmers mit dem Magneten in das Füllstandgebergehäuse und entsprechende Anordnung von Sensoren und Magneten der konstruktive Aufwand minimiert und die Möglichkeit zur Füllmengenmessung auch bei Schräglage des Flüssigkeitsbehälters geschaffen.

## Beschreibung

Die Erfindung betrifft einen Füllstandgeber und einem zugehörigen Flüssigkeitsbehälter, insbesondere in Kraftfahrzeugen, mit einem an der Oberseite des Flüssigkeitsbehälters befestigten Gehäuse, welches mindestens eine Öffnung aufweist, mit einem Schwimmer und einem Magneten, der in funktionaler Verbindung zu einem programmierbaren berührungslosen Sensor steht, der ebenfalls in das Gehäuse integriert ist.

Aus der DE 443 83 22 C2 ist ein Füllstandgeber bekannt, der einen Schwimmer aufweist, welcher über einen Schwimmerhebel mit einem Schleifer-Potentiometer in Verbindung steht und abhängig vom Füllstand im Flüssigkeitsbehälter dieses Schleifer-Potentiometer einstellt, welches das entstehende elektrische Signal zur Füllstandsanzeige nutzt. Solche Füllstandgeber haben insbesondere den Nachteil, daß das Potentiometer mechanischem Verschleiß unterliegt.

Aus diesem Grunde werden in den letzten Jahren vermehrt berührungslose Sensoren zur Füllstandsmessung eingesetzt.

Eine solche Füllstandsmessvorrichtung ist beispielsweise in der Offenlegungsschrift DE 199 44 330 A1 beschrieben. Diese Füllstandsmessvorrichtung für einen Flüssigkeitsbehälter besteht ebenfalls aus einem Hebelarm, an dessen Ende ein Schwimmer angeordnet ist und dessen anderes Ende in einem Trägerteil gelagert ist. Der Hebelarm ist hier mit einer Magneteinrichtung verbunden, welche sich bei Änderung des Füllstandes im Behälter relativ zu einem Magnetsensor bewegt, der innerhalb eines Füllstandssensorgehäuses untergebracht ist. Durch diese Relativbewegung der Magneteinrichtung zum feststehenden Magnetsensor ändert sich das auf ihn einwirkende Magnetfeld, so daß der Magnetsensor ein Ausgabesignal liefern kann, welches dem Füllstand im Flüssigkeitsbehälter entspricht.

Ein weiteres Beispiel einer Füllstandsmeßvorrichtung mit berührungslosem Sensor offenbart die Offenlegungsschrift DE 199 25 185 A1. Diese Füllstandsmeßvorrichtung weist einen um eine Drehachse drehbar gelagerten Schwimmer auf sowie einen an der Drehachse befestigten Permanentmagneten, dessen magnetisches Feld sich bei Änderung des Füllstandes mit Drehung der Drehachse D verändert. Er kommuniziert dabei mit einem ihm direkt gegenüberliegenden in einem Rohr befestigten berührungslosen Sensor, der entsprechend der veränderten Feldstärke ein Ausgangssignal erzeugt, welches bei entsprechender Programmierung des Sensors dem Füllstand im Flüssigkeitsbehälter entspricht.

Ein weiteres Beispiel zum Messen von Flüssigkeiten in Flüssigkeitsbehältern offenbart DE 41 28 178 C2. Hier befindet sich im Inneren des Flüssigkeitsbehälters ein Rohr, in welches die Flüssigkeit entsprechend der Flüssigkeitsmenge des Flüssigkeitsbehälters eindringen kann. Des weiteren befindet sich in diesem Rohr ein als Kugel ausgebildeter magnetischer Schwimmkörper, der mit seiner jeweils eingenommenen Höhenposition und seinem magnetischen Feld auf jeweils eine von an der Außenseite des Rohres in verschiedenen Höhen angebrachten Hall-Sensoren einwirkt. Diese Hall-Sensoren stehen wiederum mit einer Auswerteeinrichtung in Funktionsverbindung, welche ein Ausgangssignal zur Füllstandsmengenanzeige liefert.

Dadurch, daß die Sensoren weder Kontakt zur Flüssigkeit noch zu anderen mechanischen Bauteilen aufweisen, entstand durch diese Füllstandgeber der Vorteil, auch im Langzeitbetrieb genaue Meßergebnisse liefern zu können, da sie verschleißfrei arbeiten, allerdings bleibt ihr Aufbau kompliziert und somit kostenintensiv. Während bei der letztgenannten Schrift insbesondere Kosten durch die hohe Anzahl an benötigten Sensoren entstehen, macht bei den anderen genannten Gegenständen insbesondere die Montage der Hebelarme Schwierigkeiten. Der Hauptnachteil all dieser Erfindungen besteht jedoch darin, daß eine Schräglage des Tanks und somit eine Veränderung der Flüssigkeitssäule an der Position des Schwimmers nicht ausgeglichen werden kann. Entsprechend ist auch eine Kalibrierung der Sensoren nur bei vollständig waagerecht liegendem Tank möglich.

Der vorliegenden Erfindung liegen somit die Aufgaben zugrunde, einen Flüssigkeitsgeber so zu gestalten, daß er erstens wartungsarm und einfach in seiner Konstruktion ist, und zweitens gleichzeitig Schräglagen des Tanks insbesondere bei Berg- oder Talfahrt kompensieren kann.

Die erste Aufgabe wird dadurch gelöst, daß der Schwimmer einen Magneten aufweist und derart im Gehäuse angeordnet ist, daß er relativ zum Gehäuse nur eine translatorische Bewegung ausführen kann.

Vorteilhaft ist die Anordnung des Magneten im Schwimmer, so dass er keinen Kontakt zur Flüssigkeit aufweist. Der am unteren Ende des Gehäuses angeordnete Sensor ist ebenso wie die oben aus dem Gehäuse herausgeführten i Anschlußdrähte im Gehäuse integriert, z.B. mit Kunststoff umspritzt. Durch die Plazierung des Sensors am unteren Ende des Gehäuses wird es möglich, vor allem bei kleinen Füllmengen sehr exakte Werte zu liefern, da der Magnet in diesem Bereich sehr kleine Abstände zum Sensor aufweist und somit bereits kleine Veränderungen des Abstandes große Feldstärkenänderungen nach sich ziehen. Um das magnetische Feld zusätzlich zu verstärken und noch bessere Werte zu erhalten, kann an der Unterseite des Sensors ein Rückschlussblech zur Verstärkung des magnetischen Flusses angebracht werden, die mit dem Sensor im Gehäuse integriert ist. Als berührungsloser Sensor wird insbesondere ein Hall-Sensor verwendet, der über frei programmierbare Stützstellen verfügt und mit einer Auswerteeinheit verbunden ist. Des weiteren werden an der unteren Seite des Gehäuses, an der die Flüssigkeit eintritt, Vorrichtungen angeordnet, welche die einströmende Flüssigkeit bremsen bzw. brechen. Dazu kann das untere Ende des Gehäuses auf unterschiedliche Art und Weise gestaltet werden. So bietet es sich beispielsweise an, dieses untere Ende mit einer Schranke auszuführen oder aber mehrere kleine Öffnungen in dem Boden des Gehäuses vorzusehen, um ein Schwappen der Flüssigkeit in das Gehäuse zu verhindern. Dabei grenzt diese Unterseite des Gehäuses unmittelbar an den Boden eines Flüssigkeitsbehälters, um auch geringe Flüssigkeitsmengen messen zu können. Das Gehäuse besitzt des weiteren Anschlagkanten, die den Schwimmer in seiner translatorischen Bewegung sowohl nach oben als auch nach unten einschränken.

Des weiteren betrifft die Erfindung einen Flüssigkeitsbehälter mit einem derartigen Füllstandgeber.

Die zweite Aufgabe der Flüssigkeitsmengenbestimmung bei Schräglage des Flüssigkeitsbehälters wird dadurch gelöst, daß die Oberseite des Flüssigkeitsbehälters über ein Kugelgelenk frei drehbar mit dem Gehäuse des Füllstandgebers verbunden ist, wodurch das Gehäuse mit dem Schwimmer der Lage der Flüssigkeitssäule im Behälter beispielsweise bei Berg- oder Talfahrt folgen und somit die Lage der Flüssigkeit im Behälter über die Lage des Füllstandgebers bestimmt werden kann.

Eine Ausführungsform, insbesondere bei nicht kugelförmigen oder kleinen Flüssigkeitsbehältern wie z.B. Kraftfahrzeugtanks beinhaltet die Anordnung eines Magneten im oberen Bereich des Gehäuses. Dieser schwenkt insbesondere bei Berg- oder Talfahrten mit der Flüssigkeitssäule und dem Gehäuse um das Kugelgelenk. Durch diese Relativbewegung zu einem zweiten in einem Deckel des Flüssigkeitsbehälters direkt oberhalb des Magneten angeordneten Sensor verändert sich das auf diesen zweiten Sensor einwirkende Magnetfeld mit der Winkelstellung des Gehäuses des Füllstandgebers zur Oberseite des Flüssigkeitsbehälters, so dass das entstehende elektrische Signal ein Maß für die Stellung des Füllstandgebers im Tank ist. Diese Sensor-Magnet-Einheit kann vom magnetischen Feld des Schwimmermagneten abgeschirmt werden. Beide Sensoren sind mit einer Auswerteeinheit verbunden, die aufgrund der beiden Ausgangssignale der Sensoren eine genaue Flüssigkeitsmenge berechnen kann.

In einer weiterführenden Ausführungsform ist der zweite Magnet ein Ringmagnet dessen Außendurchmesser in etwa dem Innendurchmesser des Füllstandgebergehäuses entspricht und der im Bereich der Gehäuseoberseite des Füllstandgebers angeordnet ist. Die Pole dieses Magneten liegen an seiner Unter- und Oberseite mit jeweils gleicher Polung über den gesamten Umfang. Außerdem ist um 90° versetzt zum zweiten Sensor und in gleicher Einbauhöhe ein dritter Sensor im Deckel des Flüssigkeitsbehälters angeordnet. Beide Sensoren kommunizieren mit dem Ringmagnet, so daß die Stellung des Füllstandgebergehäuses im Flüssigkeitsbehälter aufgrund der sich verändernden magnetischen Feldstärken, die auf den zweiten und dritten Sensor einwirken, eindeutig bestimmt werden kann. Unter Hinzunahme der Werte des ersten Sensors liegt somit die Stellung des Schwimmers und somit die Oberfläche der Flüssigkeit im Tank in allen drei Ebenen fest. Bei der Kalibrierung wird der Flüssigkeitsbehälter sowohl mit fest vorgegebenen Flüssigkeitsmengen als auch mit fest vorgegebenen Winkelstellungen des Behälters zum Boden in den verschiedenen Ebenen beaufschlagt. Die entstehenden Signale an den Sensoren können dann jeweils einer bestimmten Füllmenge bei der Programmierung zugeordnet werden. Dazwischen liegende Werte werden interpoliert.

Ausführungsbeispiele sind in den Zeichnungen dargestellt und wird nachfolgend beschrieben.

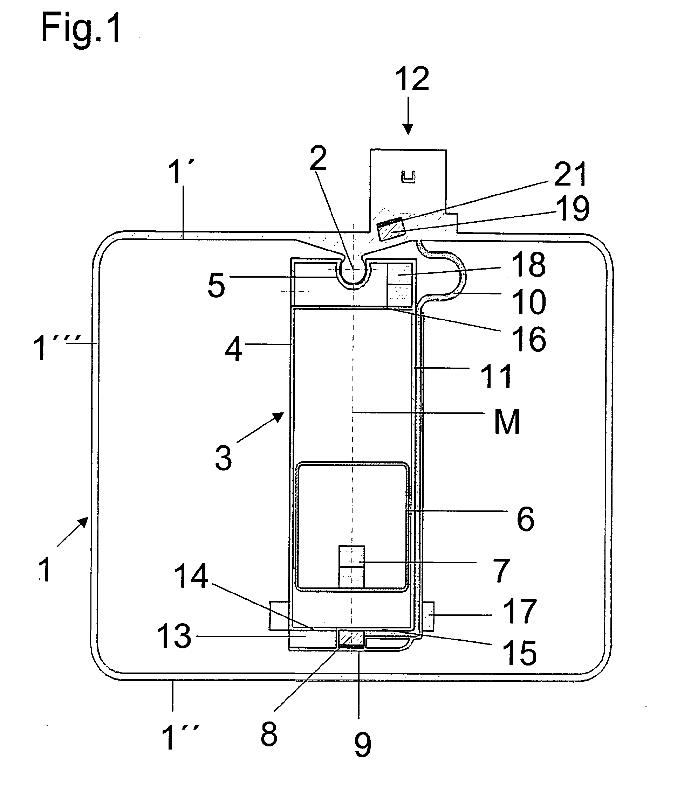

Figur 1 zeigt eine schematische geschnittene Darstellung eines erfindungsgemäßen Flüssigkeitsbehälters mit Füllstandgeber und zwei Sensoren.

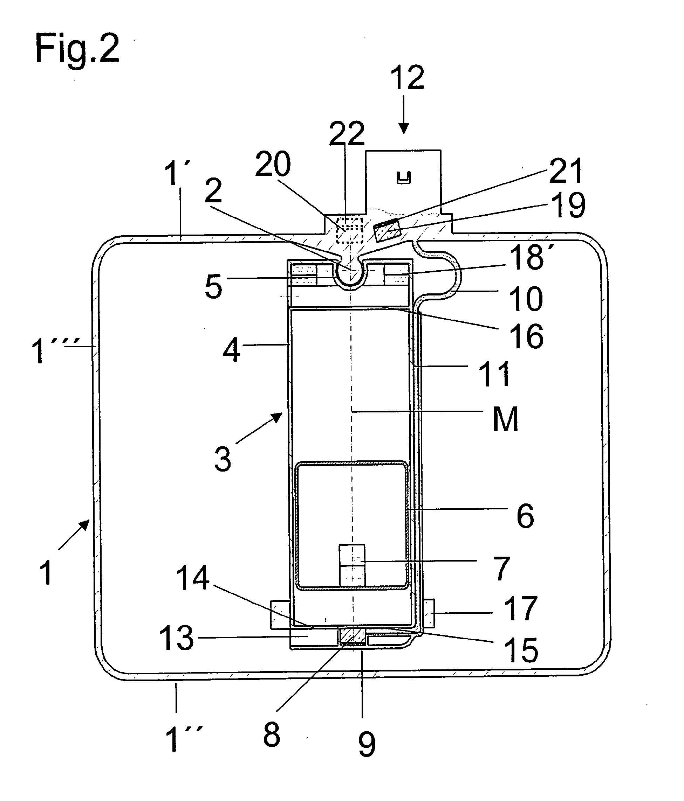

Figur 2 zeigt eine schematische geschnittene Darstellung eines erfindungsgemäßen Flüssigkeitsbehälters mit Füllstandgeber und drei Sensoren.

Ein dargestellter Flüssigkeitsbehälter 1 besteht aus einer Oberseite 1', einem Bodenteil 1" sowie einem oder mehreren Seitenteil/-en 1"'. An der Oberseite 1' des Flüssigkeitsbehälters 1 befindet sich ein Kugelkopf 2 eines Kugelgelenkes. Dieser dient zur frei drehbar gelagerten Verbindung des Flüssigkeitsbehälters 1 mit einem Füllstandgeber 3, dessen Gehäuse 4 eine Kugelgelenkpfanne 5 aufweist, die mit dem Kugelgelenkkopf 2 verbunden ist. Im Gehäuse 4 des Füllstandgebers 3 befindet sich ein Schwimmer 6, dessen Außenmaße so gewählt sind, daß er im Gehäuse 4 nur eine translatorische Bewegung ausführen kann. Im Schwimmer 6 ist ein Magnet 7 fest angeordnet. Dieser erste Magnet 7 steht in funktionaler Verbindung zu einem ersten Hall-Sensor 8, der im unteren Bereich des Füllstandgebergehäuses 4 angeordnet ist. Auf der vom Magneten 7 abgewandten Seite der Sensors 8 befindet sich ein Rückschlußblech 9 zur Verstärkung des auf den Sensor 8 einwirkenden magnetischen Kraftfeldes. Der Sensor 8 ist über ein Anschlußkabel 10, welches durch einen Kanal 11 im Gehäuse 4 geführt ist, mit einem an der Oberseite 1' des Flüssigkeitsbehälters 1 angeordneten Anschlußstecker 12 verbunden, der die Signale an eine nicht dargestellte Auswerteeinheit weitergibt.

Wird der Flüssigkeitsbehälter 1 mit Flüssigkeit gefüllt, strömt diese durch einen Einströmkanal 13 in das Innere des Gehäuses 4, dessen unteres Ende im waagerechten Zustand des Flüssigkeitsbehälters 1 möglichst nah an dessen Unterseite 1" angrenzt. Ein Hineinschwappen der Flüssigkeit in den Füllstandgeber 3 wird durch eine Schranke 14 verhindert. Der Schwimmer 6 treibt nun mit dem Magneten 7 auf der Flüssigkeitssäule, so daß bei steigender Flüssigkeitssäule der Abstand zum Sensor 8 vergrößert wird bzw. bei fallender Flüssigkeitssäule der Abstand zum Sensor 8 verkleinert wird, wodurch das auf den ersten Sensor 8 einwirkende Magnetfeld des Magneten 7 kleiner bzw. größer wird, so daß ein von der Höhe der Flüssigkeitssäule abhängiges Signal am Sensor 8 entsteht und über einen Anschlußstecker 12 an eine Auswerteeinheit weitergegeben werden kann.

Im Gehäuse 4 befinden sich des weiteren eine untere Anschlagkante 15 und eine obere Anschlagkante 16, welche die translatorische Bewegung des Schwimmers 6 im Gehäuse 4 nach oben bzw. unten begrenzen. Durch ein Gewicht 17, welches am unteren Ende des Gehäuses 4 angebracht ist, wird der Schwerpunkt des Füllstandgebers 3 möglichst weit nach unten verlagert, um eine optimale Position des Gehäuses 4 auf der Flüssigkeit im Flüssigkeitsbehälter 1 sicherzustellen. Durch die Aufhängung des Füllstandgebers 3 über das Kugelgelenk am Flüssigkeitsbehälter 1 folgt der Füllstandgeber 3 den auf ihn einwirkenden Kräften (Erdanziehung, Zentrifugalkraft) in gleicher Weise wie die Flüssigkeitssäule im Flüssigkeitsbehälter 1, so daß seine Mittelachse M auch bei Berg- oder Talfahrten oder bei Kurvenfahrten immer etwa in einem Winkel von 90° zur Oberfläche der Flüssigkeitssäule im Flüssigkeitsbehälter 1 steht.

Bei einem großen bzw. nicht kugelförmigen Behälter 1 ist es dann von Vorteil, im oberen Bereich des Gehäuses 4 einen zweiten Magneten 18 anzubringen, der im Idealfall als Ringmagnet 18' ausgebildet ist und mit einem zweiten Sensor 19 und gegebenenfalls dritten Sensor 20 kommuniziert, die im Gehäuse des Flüssigkeitsbehälters um 90° versetzt zueinander angebracht sind. Dabei liegen die Sensoren ungefähr in gleicher Höhe im Deckel 1' des Flüssigkeitsbehälters 1 über dem Ringmagneten 18' bei waagerechter Stellung des Flüssigkeitsbehälters. Auch diese Sensoren 19 und 20 verfügen über je ein Rückschlußblech 21, 22 zur Verstärkung des auf sie einwirkenden magnetischen Feldes des Magneten 18. Die Sensoren 19 und 20 sind ebenso wie der Sensor 8 mit einer nicht dargestellten Auswerteeinheit verbunden, so daß die exakte Lage, also Auslenkungswinkel und -richtung des Füllstandgebers 3 zum Flüssigkeitsbehälter 1 berechnet werden kann. Dies geschieht wie beim Sensor 8 durch die Umwandlung der mit der Lage des Magneten zum Sensor sich verändernden magnetischen Kräfte in elektrische Signale.

Auf diese Art und Weise stehen der Auswerteeinheit drei Signale zur Verfügung, die die Lage des Schwimmers 6 im Flüssigkeitsbehälter 1 in allen drei Ebenen exakt bestimmen. Jeder Füllmenge können also beim Auslitern bzw. Kalibrieren verschiedene Schwimmerpositionen bzw. Füllstandgeberneigungen zugeordnet werden. Mit Hilfe dieser erhaltenen Referenzpunkte ist es im späteren Betrieb möglich, auch bei geneigtem Flüssigkeitsbehälter exakte Füllmengen zuzuordnen.

Mit der erfindungsgemäßen Ausführung liegt somit eine Konstruktion vor, die es möglich macht, unabhängig von der Fahrsituation eines Kraftfahrzeugs, beispielsweise bei Berg- oder Talfahrt, eine exakte Füllmengenangabe an den Fahrer des Kraftfahrzeugs zu liefern.

Es sollte deutlich sein, daß die Erfindung nicht auf die beschriebenen Ausführungsformen der Magneten 8,18 bzw. der Form des Gehäuses 4, des Schwimmers 6 oder der frei drehbaren Aufhängung 2,5 beschränkt ist.

## Patentansprüche

1. Füllstandgeber für Flüssigkeitsbehälter insbesondere in Kraftfahrzeugen mit einem Gehäuse, welches mindestens eine Öffnung aufweist, mit einem Schwimmer und einem Magneten, der in funktionaler Verbindung zu einem berührungslosen Sensor steht, der ebenfalls in das Gehäuse integriert ist, **dadurch gekennzeichnet, daß** der Schwimmer (6) einen Magneten (7) aufweist und derart im Gehäuse (4) angeordnet ist, daß er relativ zum Gehäuse (4) nur eine translatorische Bewegung ausführen kann.

2. Füllstandgeber nach Anspruch 1, **dadurch gekennzeichnet, daß** der Magnet (7) so im Schwimmer (6) angeordnet ist, daß er keinen Kontakt zur Flüssigkeit aufweist.

3. Füllstandgeber nach einem der Ansprüche 1 oder 2, **dadurch gekennzeichnet, daß** der Sensor (8) und seine Anschlußdrähte (10) beispielsweise durch Kunststoffumspritzen so in das Gehäuse (4) integriert sind, daß keine Berührung zur Flüssigkeit auftritt.

4. Füllstandgeber nach einem der vorhergehenden Ansprüche, **dadurch gekennzeichnet, daß** der Sensor (8) in einem unteren Bereich des Gehäuses (4) angeordnet ist, um insbesondere bei kleinen Flüssigkeitsmengen aufgrund des geringeren Abstandes zum Magneten exakte Ausgabewerte zuordnen zu können.

5. Füllstandgeber nach einem der vorhergehenden Ansprüche, **dadurch gekennzeichnet, daß** auf der vom Magneten (7) abgewandten Seite des Sensors (8) ein Rückschlussblech (9) zur Verstärkung des magnetischen Flusses im Bereich des Sensors (8) angebracht ist wobei das Rückschlussblech mit dem Sensor (8) im Gehäuse (4) integriert ist.

6. Füllstandgeber nach einem der vorhergehenden Ansprüche, **dadurch gekennzeichnet, daß** die Öffnung oder Öffnungen (13) zum Einströmen der Flüssigkeit in das Gehäuse (4) im Bodenbereich des Gehäuses (4) angeordnet sind, und zwar so, daß die einströmende Flüssigkeit gebrochen bzw. gebremst wird oder daß zumindest im Öffnungsbereich Elemente wie eine Schranke (14) zum Bremsen bzw. Brechen der einströmdenden Flüssigkeit vorgesehen sind.

7. Füllstandgeber nach einem der vorhergehenden Ansprüche, **dadurch gekennzeichnet, daß** das Gehäuse (4) Anschlagkanten (15, 16) besitzt, die den Schwimmer (6) in seiner translatorischen Bewegung nach oben und unten einschränken.

8. Füllstandgeber nach einem der vorhergehenden Ansprüche, **dadurch gekennzeichnet, daß** die Unterseite des Gehäuses (4) unmittelbar an den Boden (1") des Flüssigkeitsbehälters (1) angrenzt.

9. Flüssigkeitsbehälter mit einem an der Oberseite befestigten Füllstandgeber nach einem der Ansprüche 1 bis 8.

10. Flüssigkeitsbehälter mit einem Füllstandgeber nach Anspruch 9, **dadurch gekennzeichnet, daß** die Oberseite (1') des Flüssigkeitsbehälters (1) über ein Kugelgelenk (2, 5) frei drehbar mit dem Gehäuse (4) des Füllstandgebers (3) verbunden ist.

11. Flüssigkeitsbehälter mit einem Füllstandgeber nach Anspruch 10, **dadurch gekennzeichnet, daß** im oberen Bereich des Gehäuses (4) ein Magnet (18) angeordnet ist, der in Wirkverbindung zu einem zweiten berührungslosen Sensor (19) steht, der oberhalb des Magneten (18) im Deckel (1') des Flüssigkeitsbehälters (1) angeordnet ist, wobei bei Auslenkung des Gehäuses eine Relativbewegung zwischen Magnet und Sensor stattfindet und wobei diese zweite Sensor-Magnet-Einheit gegenüber der ersten, bestehend aus dem Magneten (7) und dem Sensor (8) abgeschirmt ist.

12. Flüssigkeitsbehälter mit einem Füllstandgeber nach Anspruch 10, **dadurch gekennzeichnet, daß** im oberen Bereich des Gehäuses (4) des Füllstandgebers (3) ein Ringmagnet (18') angeordnet ist, der in Wirkverbindung zu einem zweiten und dritten berührungslosen Sensor (19, 20) steht, die im Deckel (1') des Flüssigkeitsbehälters (1) um 90° versetzt zueinander angeordnet sind, wobei bei Auslenkung des Gehäuses eine Relativbewegung zwischen Ringmagnet (18') und den beiden Sensoren (19 und 20) stattfindet und wobei diese Sensor-Magnet-Einheit (18', 19, 20) gegenüber der Sensor-Magnet-Einheit (7,8) abgeschirmt ist.
